Europäisches Patentamt

European Patent Office

Office européen des brevets

(11) Numéro de publication: **0 016 891**
A1

# (12) DEMANDE DE BREVET EUROPEEN

(21) Numéro de dépôt: 79400209.7

(22) Date de dépôt: 02.04.79

(51) Int. Cl.³: **A 43 B 9/16,** A 43 B 5/02, B 29 F 1/12

(43) Date de publication de la demande: **15.10.80**
**Bulletin 80/21**

(84) Etats contractants désignés: **DE GB IT NL SE**

(71) Demandeur: **Ours, Rosette, 62, avenue Clarisse, F-92420 Vaucresson (FR)**

(72) Inventeur: **Ours, Rosette, 62, avenue Clarisse, F-92420 Vaucresson (FR)**

(74) Mandataire: **Tony-Durand, Serge, Cabinet Tony-Durand 22, Boulevard Voltaire, F-75011 Paris (FR)**

(54) **Procédé de fabrication de chaussures de sport, et chaussures ainsi fabriquées.**

(57) a) Procédé de fabrication d'une chaussure de sport et chaussure ainsi fabriquée, à partir d'un chausson en cuir ou autre matière appropriée, destiné à constituer une doublure.

b) Conformément au présent procédé, on effectue sur ce chausson:

– le surmoulage d'une couche (11) en matière plastique recouvrant la totalité de la tige du chausson;
– puis le surmoulage, sur cet ensemble, d'une «armature» de raidissement en matière plastique plus rigide que précédemment, et constituant uniquement une coque (15) d'enve-loppement du contrefort arrière de la tige ainsi qu'une fine semelle intermédiaire (16) recouvrant la semelle du chaus-son;
– enfin l'adjonction d'une semelle externe d'usure (17) en ma-tière plastique moulée, qui peut avoir été fabriquée indépendamment ou qui peut être moulée en même temps que l'armature de raidissement, mais en une matière éventuelle-ment moins rigide.

c) Le présent procédé peut être utilisé notamment pour la fa-brication de chaussures de football.

1

<u>Procédé de fabrication de chaussures de sport, et chaus-</u>
<u>sures ainsi fabriquées</u>

La présente invention concerne la fabrication des chaussures de sport, telles que des chaussures de football.

Dans le cas de ces dernières, celles-ci constituent la pièce maîtresse de l'équipement des joueurs et ce, d'autant plus que ceux-ci ne touchent le ballon qu'avec leurs chaussures. Or, celles-ci se trouvent soumises à des contraintes importantes qui s'exercent quel que soit le temps, notamment sous la pluie, dans la neige ou la boue, etc. Par ailleurs, peu de joueurs de football prennent soin de leurs chaussures. En effet, la plupart du temps, les joueurs se contentent de les laver à l'eau courante pour les ranger dans leur sac.

Dans ces conditions, les fabricants ont cherché à réaliser des chaussures de football suffisamment robustes pour résister aux contraintes et mauvais traitements auxquels celles-ci sont soumises. Ainsi, ils ont été amenés à remplacer les anciennes semelles de cuir par des semelles monobloc, moulées en caoutchouc, ou en matière plastique. Ceci permet de disposer de semelles beaucoup plus résistantes que les anciennes semelles en cuir. Cependant, comme le dessus des chaussures ainsi fabriquées reste réalisé en cuir, ce mode de fabrication ne résoud par complètement le problème exposé précédemment.

Il a par ailleurs été proposé de fabriquer certaines chaussures de sport en partant d'un chausson en cuir ou autre matière appropriée destinée à servir ultérieurement de doublure et sur lequel on surmoule une ou plusieurs couches de recouvrement en matière plastique. Une telle solution est adoptée dans le but d'obtenir une parfaite étanchéité, notamment à l'endroit de la jonction entre la semelle et la tige de la chaussure. C'est du reste la raison pour laquelle la ou les couches de recouvrement surmoulées en matière plastique entou-

2    0016891

rent alors complètement la zone de raccordement entre semelle et tige.

Mais là encore, une solution de ce genre n'est pas de nature à donner satisfaction dans le cas de chaussures de football. En effet, pour celles-ci, il est nécessaire de pouvoir obtenir une parfaite résistance aux contraintes exposées précédemment.

Par ailleurs, il est indispensable qu'une telle chaussure ne puisse pas se déformer lors d'un shoot contre le ballon, car ceci nuirait à la précision du lancer de ce dernier.

A ce sujet, il convient de noter que l'une des parties du dessus des chaussures de football, qui joue un rôle important, est le contrefort arrière de celles-ci. En effet, celui-ci constitue en quelque sorte l'ossature de la chaussure et il a également pour fonction d'immobiliser le talon du pied à l'intérieur de cette dernière afin de lui interdire toute possibilité de soulèvement ou d'inclinaison sur le côté. Le rôle du contrefort est donc déterminant et pour éviter tout risque de déformation intempestif d'une chaussure de football, il convient que le contrefort arrière fasse intimement corps avec la semelle de la chaussure afin qu'il ne puisse pas y avoir de "voilage" de celle-ci sur elle-même et que de ce fait ., la précision du shoot soit certaine.

La présente invention a donc pour objet un nouveau procédé de fabrication conçu pour réaliser cet objectif.

Ce procédé est du type dans lequel la fabrication est réalisée à partir d'un chausson en cuir ou autre matière appropriée, destiné à constituer une doublure, consistant à effectuer sur celui-ci le surmoulage successif d'au moins deux parties de recouvrement en matière plastique recouvrant la semelle de ce chausson et au moins partiellement la tige de celui-ci. Cependant, ce procédé est caractérisé en ce que l'on effectue successivement les opérations suivantes :

- surmoulage d'une couche en matière plastique recouvrant la totalité de la tige du chausson ;
- surmoulage, sur cet ensemble, d'une "armature" de raidissement en matière plastique plus rigide que précédemment, et constituant uniquement une coque d'enveloppement du contrefort arrière de la tige ainsi qu'une fine semelle intermédiaire ;
- adjonction d'une semelle externe d'usure en matière plastique moulée, qui peut avoir été fabriquée indépendamment ou qui peut être moulée en même temps que l'armature de raidissement, mais en une matière éventuellement moins rigide.

Dans une forme particulière de mise en oeuvre de ce procédé, la semelle externe d'usure est moulée en même temps que l'armature de raidissement - constituée par la coque du contrefort et la fine semelle.

La présente invention a également pour objet les chaussures de sport, telles que chaussures de football, fabriquées par mise en oeuvre du procédé défini ci-dessus. Ces chaussures comportent une doublure en cuir ou autre matière appropriée sur laquelle sont surmoulées deux parties de recouvrement en matières plastiques de nature différente et elles sont caractérisées en ce que la première couche de matière plastique surmoulée au contact direct de la doublure recouvre la totalité de la tige de celle-ci, cependant que la seconde partie surmoulée constitue une armature de raidissement réalisée en matière plastique plus rigide que dans le cas de la première couche et qui comprend uniquement une coque d'enveloppement du contrefort arrière de la tige, ainsi qu'une fine semelle intermédiaire, une semelle externe d'usure étant rapportée sur cette dernière.

Cependant, d'autres particularités et avantages de l'objet de l'invention apparaîtront au cours de la description suivante. Cette description est donnée en référence au dessin annexé à simple titre indicatif, et sur lequel :

La figure 1 est une vue en perspective du chausson utilisé comme ébauche pour la mise en oeuvre du procédé selon l'invention ;

La figure 2 représente ce chausson après mise en place sur une forme et avant disposition de l'ensemble à l'intérieur d'un premier moule de surmoulage ;

La figure 3 est une vue en coupe du premier moule utilisé, cette vue passant par la ligne III-III de la figure 2 ;

La figure 4 est une vue en perspective similaire à la figure 2, mais qui représente l'ébauche après surmoulage d'une première couche de matière plastique recouvrant la totalité de la tige du chausson servant de doublure ;

La figure 5 est une vue en coupe du second moule utilisé pour le surmoulage d'une armature constituée par une coque enveloppant le contrefort et une fine semelle intermédiaire, cette vue correspondant à une coupe selon la ligne III-III de la figure 2 ;

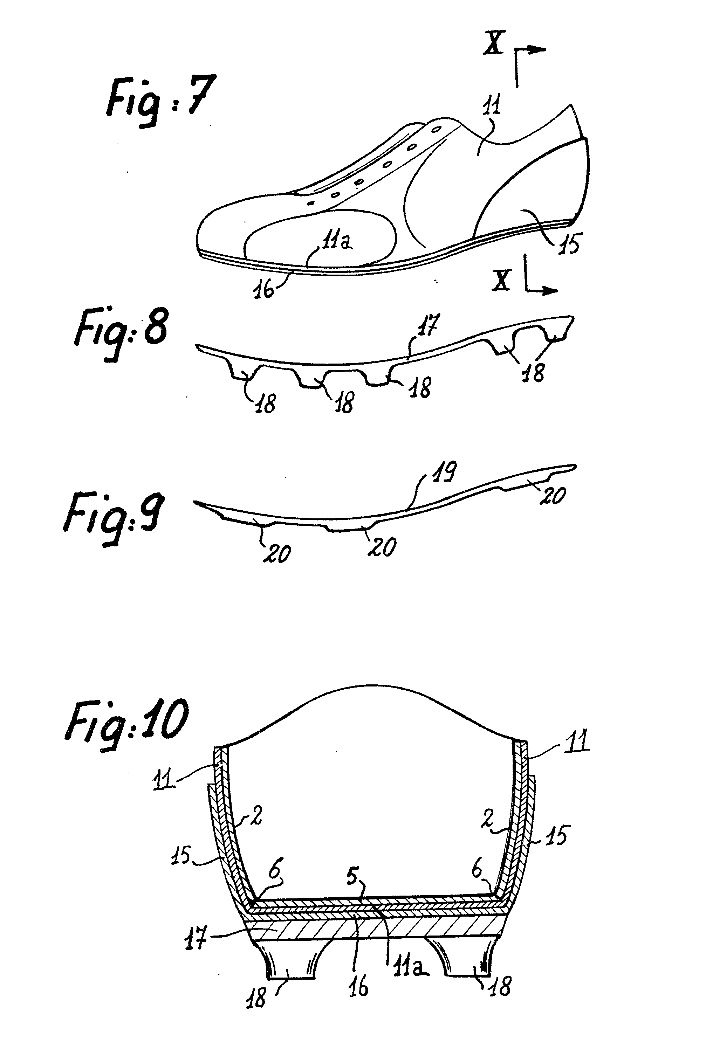

La figure 6 est une vue en coupe par le même plan, mais après dégagement de l'ensemble en dehors du dernier moule utilisé ;

La figure 7 est une vue en perspective de la chaussure ainsi obtenue avant mise en place de la semelle externe d'usure de celle-ci ;

Les figures 8 et 9 sont des vues en élévation de deux formes de réalisation différentes de la semelle externe d'usure rapportée au-dessus de cette chaussure ;

La figure 10 est une vue en coupe selon la ligne X-X de la figure 7, après mise en place de l'une de ces deux semelles externes.

Le procédé selon l'invention consiste à réaliser la fabrication d'une chaussure de sport, et plus particulièrement d'une chaussure de football, en partant d'une ébauche constituée par une sorte de chausson 1 en cuir ou autre matière appropriée. Le dessus de ce chausson est formé par deux pièces de cuir 2 ou autre matière appropriée, simplement assemblées à l'avant et à l'arrière, par deux lignes 3 et 4 de couture en zigzag. Ce dessus est fixé "bord à bord" à une semelle première 5 et ce, par des lignes de couture 6 de type "Strobel".

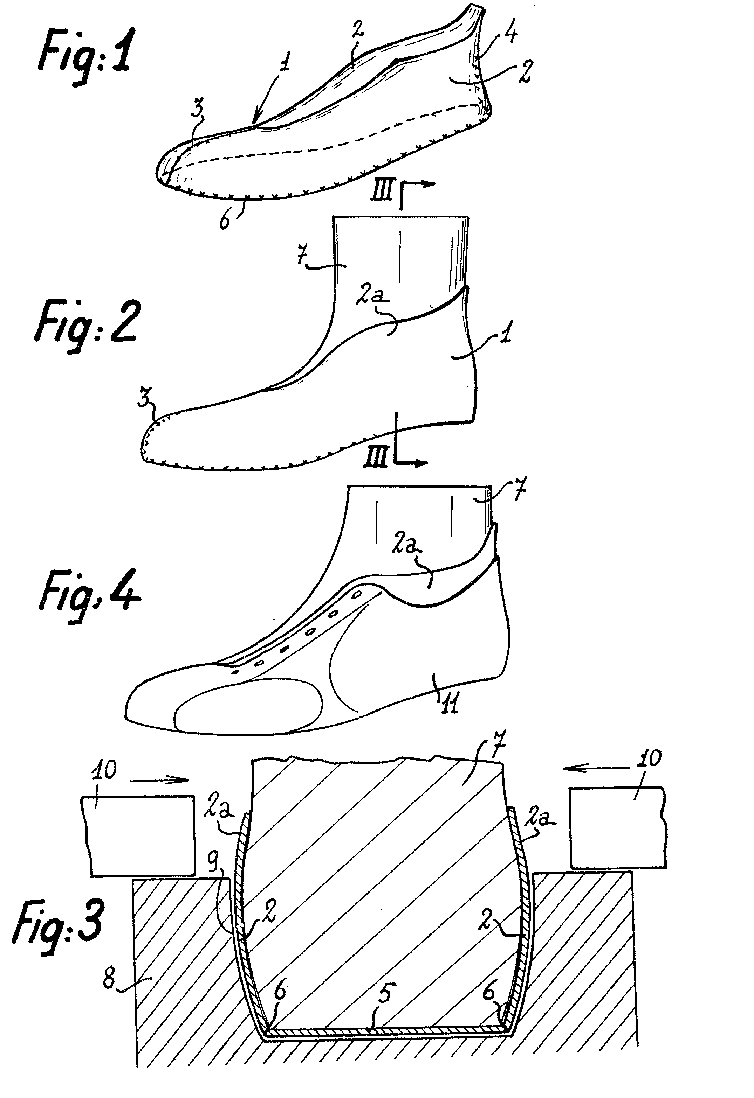

Le chausson 1 ainsi constitué est renformé sur une forme 7, comme représenté à la figure 2 et après que la face externe de ce chausson ait été encollée, l'ensemble est placé dans un moule 8 comportant une cavité 9 apte à recevoir la partie inférieure de la forme 7 et le chausson 1 placé sur celle-ci.

Comme il apparaît sur la figure 3, cette cavité 9 réserve un intervalle autour du chausson 1. Cet intervalle est destiné à servir de cavité de moulage pour le surmoulage d'une peau extérieure 11 en résine synthétique recouvrant entièrement la tige du chausson 1, ainsi que la semelle 5 de celui-ci, cette dernière étant recouverte par une partie 11a de cette peau surmoulée.

Les pièces 2 constituant le dessus du chausson font saillie au-dessus de la cavité 9 du moule 8 par des parties 2a destinées à être éliminées ultérieurement. Or, le moule comporte deux poinçons mobiles 10 destinés à s'appliquer contre ces parties afin de fermer la cavité de moulage 9 avant injection de la matière plastique.

Après achèvement de l'opération de moulage, les parties 10a de la tige du chausson font saillie au-dessus de la peau externe 11 en résine synthétique. Cependant, ces parties 10a sont destinées à être ensuite éliminées par découpage le long du bord supérieur de la peau externe 11.

Celle-ci constitue l'élément qui donne toute sa robustesse à la tige de la chaussure correspondante. Cependant, malgré la présence de cette peau extérieure en résine synthétique, la tige de la chaussure correspondante ne présente pas les inconvénients habituels des tiges réalisées exclusivement en matière plastique. En effet, la présence d'un chausson intérieur 1 en cuir permet à la chaussure de "respirer". Par ailleurs, la tige de la chaussure conserve une souplesse suffisante pour pouvoir se galber au pied de l'utilisateur.

Bien entendu, il est possible de prévoir tout relief ou tout dessin désiré sur la peau externe 11 en matière plastique, notamment des nervures ou zones plus épaisses de renforcement.

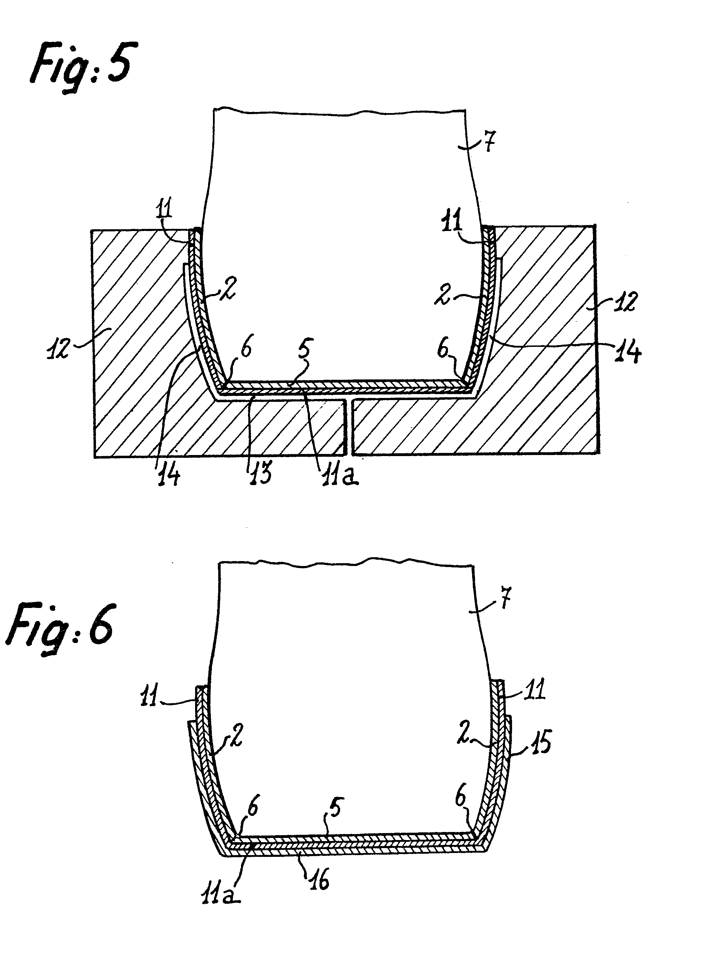

Sans être retiré de la forme 7, l'ensemble ainsi obtenu est ensuite placé à l'intérieur du second moule représenté à la figure 5. Celui-ci comprend deux coquilles complémentaires 12 susceptibles de s'ouvrir par écartement en sens inverse. Ces coquilles réservent un intervalle 13 qui s'étend au-dessous de la semelle 5 du chausson intérieur 1 et ce, sur toute la surface de cette semelle.

Par ailleurs, ces coquilles s'appliquent étroitement contre la surface extérieure de la peau externe 11 en matière plastique, sauf toutefois à l'endroit du contrefort arrière. En effet, à cet endroit, les deux coquilles 12 réservent un intervalle 14 qui entoure le contrefort arrière, cet intervalle 14 communiquant avec l'intervalle 13 mentionné ci-dessus.

Dans ces conditions, lorsqu'on procède ensuite à une injection de matière plastique à l'intérieur de ce moule, on vient réaliser sur l'ensemble déjà décrit une armature externe constituée par la combinaison d'une coque 15 enveloppant complètement le contrefort arrière et d'une fine semelle 16 recouvrant la semelle 5 du chausson intérieur 1. En effet, la coque 15 se trouve formée par la cavité 14 du moule 12, tandis que la fine semelle 16 est formée par l'intervalle 13 de ce même moule.

Or, cette opération de surmoulage est réalisée en utilisant une matière plastique de plus grande rigidité que dans le cas précédent. En effet, il faut obtenir une coque arrière 15 suffisamment rigide pour conférer une très grande rigidité à la partie correspondante de la chaussure. Il convient également d'obtenir une fine semelle 16 de grande rigidité faisant corps avec cette coque. A cet effet, on

6    0016891

peut utiliser un caoutchouc de composition appropriée ou une matière synthétique telle que du chlorure de vinyle ou du polyuréthane.

On peut ensuite procédera la fixation en place de la semelle externe normale de la chaussure, laquelle peut être de divers types suivant les cas. Ainsi, ce peut être une semelle classique 17 à crampons 18 ou une semelle 19 pourvue de nervures externes 20. La fixation en place de cette semelle externe peut être réalisée à un stade ultérieur de fabrication.

Cependant, il est également possible de procéder à cette fixation en même temps que le surmoulage de l'armature externe constituée par la coque 15 et la fine semelle intermédiaire 16. Dans un tel cas, il convient d'utiliser un moule comportant, à l'endroit de l'intervalle 13 du moule 12, une cavité apte à recevoir une semelle externe 17 ou 19 avant mise en place de la forme 15.

Il suffit alors de prévoir des reliefs appropriés sur la surface extérieure de cette semelle pour que celle-ci se trouve solidarisée avec la fine semelle intermédiaire 16 lors du moulage de celle-ci.

Selon une autre forme de réalisation du procédé selon l'invention, on peut procéder simultanément, dans un même moule, au moulage de la semelle externe 17 ou 19 d'une part, et de l'armature externe constituée par la coque 15 du contrefort et par la fine semelle intermédiaire 16 d'autre part et ce, en utilisant deux matières plastiques de caractéristiques différentes pour le moulage de ces deux parties. Cette façon d'opérer a pour avantage de réduire les temps de fabrication, puisque la semelle externe 17 ou 19 est moulée en même temps que l'armature externe et que cette semelle externe se trouve ainsi solidarisée avec cet ensemble sans autre opération supplémentaire.

Quel que soit le mode particulier de mise en oeuvre du présent procédé, celui-ci permet d'obtenir, sur la chaussure, un contrefort rigide et résistant qui fait corps avec une fine semelle intermédiaire 16 s'étendant sur toute la longueur de celle-ci. Dans ces conditions, ce contrefort constitue une ossature parfaitement efficace pour la chaussure puisqu'il fait intégralement corps avec la fine semelle 16. Ainsi, cette ossature confère une très grande rigidité à la chaussure en évitant tout risque de déformation de celle-ci. Par ailleurs, l'existence de cette ossature rigide a pour avantage que le moindre changement d'inclinaison ou d'orientation du pied se trouve transmis à la totalité de la chaussure. Ceci assure donc une très grande précision du shoot des joueurs.

Un autre avantage réside dans le fait que la partie arrière de la chaussure comporte de ce fait une solidité à toute épreuve et une étanchéité parfaite. Cette partie arrière ne risque donc pas d'être détériorée par l'humidité ou les intempéries. Ainsi, le contrefort de la présente chaussure reste efficace pendant toute la durée d'existence de celle-ci, de sorte que ce contrefort peut parfaitement jouer le rôle qui lui est dévolu, c'est-à-dire celui de servir d'ossature pour la chaussure et d'assurer une parfaite immobilisation en place du talon du pied.

Comme il a déjà été indiqué, l'invention a également pour objet les chaussures fabriquées par mise en oeuvre du présent procédé.

A ce sujet, il faut noter que celui-ci peut être utilisé non seulement pour la fabrication de chaussures de football, mais également pour la réalisation de chaussures de sport de types différents.

REVENDICATIONS DE BREVET

1. Procédé de fabrication d'une chaussure de sport, telle qu'une chaussure de football, à partir d'un chausson en cuir ou autre matière appropriée, destiné à constituer une doublure, consistant à effectuer sur celui-ci le surmoulage successif d'au moins deux parties de recouvrement en matière plastique recouvrant la semelle de ce chausson et au moins partiellement la tige de celui-ci, caractérisé en ce que l'on effectue successivement les opérations suivantes :
- surmoulage d'une couche en matière plastique recouvrant la totalité de la tige du chausson ;
- surmoulage, sur cet ensemble, d'une "armature" de raidissement en matière plastique plus rigide que précédemment, et constituant uniquement une coque d'enveloppement du contrefort arrière de la tige ainsi qu'une fine semelle intermédiaire recouvrant la semelle du chausson ;
- adjonction d'une semelle externe d'usure en matière plastique moulée, qui peut avoir été fabriquée indépendamment ou qui peut être moulée en même temps que l'armature de raidissement, mais en une matière éventuellement moins rigide.

2. Procédé de fabrication selon la revendication 1, caractérisé en ce que la semelle externe d'usure est moulée en même temps que l'armature de raidissement - constituée par la coque du contrefort et la fine semelle intermédiaire.

3. Chaussure de sport, telle qu'une chaussure de football, fabriquée par la mise en oeuvre du procédé selon la revendication 1 et comportant une doublure en cuir ou autre matière appropriée sur laquelle sont surmoulées deux parties de recouvrement en matières plastiques de nature différente, caractérisée en ce que la première couche de matière plastique surmoulée au contact direct de la doublure recouvre la totalité de la tige de celle-ci, cependant que la seconde partie surmoulée constitue une armature de raidissement réalisée en matière plastique plus rigide que dans le cas de la première couche et qui comprend uniquement une coque d'enveloppement du contrefort arrière de la tige, ainsi qu'une fine semelle intermédiaire recouvrant la semelle de la doublure, une semelle externe d'usure étant rapportée sur cette dernière.

Fig.1

Fig.2

Fig.4

Fig.3

*Fig:5*

*Fig:6*

0016891

Fig:7

X

11

11a

16

15

X

Fig:8

17

18

18

18

18

Fig:9

19

20

20

20

Fig:10

11

11

2

2

15

15

6

5

6

17

18

16

11a

18